# EUROPEAN PATENT SPECIFICATION

(11) **EP 4 144 800 B1**
(45) Date of publication and mention of the grant of the patent: **02.07.2025**
(21) Application number: 21883299.6
(22) Date of filing: 21.10.2021
(51) Int. Cl.: C08L 69/00, C08L 71/02, C08K 5/00, C08K 5/527, C08K 5/13

(54) **POLYCARBONATE COMPOSITION AND MOLDED ARTICLES THEREOF**
POLYCARBONATZUSAMMENSETZUNG UND DARAUS GEFORMTE GEGENSTÄNDE
COMPOSITION DE POLYCARBONATE ET ARTICLES MOULÉS À BASE DE CELLE-CI

(30) Priority: 23.10.2020 KR 20200138515; 20.10.2021 KR 20210140283
(43) Date of publication of application: 08.03.2023
(73) Proprietor: LG Chem, Ltd., Seoul 07336 (KR)
(72) Inventor: BAHN, Hyong Min, Daejeon 34122 (KR); KO, Un, Daejeon 34122 (KR); SONG, Cheol Jun, Daejeon 34122 (KR); KIM, Jeeseon, Daejeon 34122 (KR); JEONG, Jaemyeng, Daejeon 34122 (KR); JANG, Hanbit, Daejeon 34122 (KR); YUM, Sugil, Daejeon 34122 (KR); HONG, Mooho, Daejeon 34122 (KR); BAE, Jungmoon, Daejeon 34122 (KR)
(74) Representative: Goddar, Heinz J.
(86) International application number: PCT/KR2021/014838
(87) International publication number: WO 2022/086231

(56) References cited:
- EP-A1- 2 522 697
- EP-A1- 3 508 512
- EP-A2- 0 296 473
- EP-A2- 0 296 473
- WO-A1-2011/083635
- JP-B2- 6 522 818
- KR-A- 20000 007 657
- KR-B1- 102 120 397
- US-A- 5 214 078
- US-A- 5 274 009

## Description

### CROSS-REFERENCE TO RELATED APPLICATION(S)

The present application is a National Phase entry pursuant to 35 U.S.C. § 371 of International Application No. PCT/KR2021/014838 filed on October 21, 2021, and claims the benefit of Korean Patent Application No. 10-2020-0138515 filed on October 23, 2020 and Korean Patent Application No. 10-2021-0140283 filed on October 20, 2021 with the Korean Intellectual Property Office.

### FIELD

The present disclosure relates to a polycarbonate composition and a molded article thereof.

### BACKGROUND

Polycarbonate resins are prepared by condensation-polymerization of an aromatic diol such as bisphenol A with a carbonate precursor such as phosgene. The polycarbonate prepared in this way has excellent impact strength, dimensional stability, heat resistance, transparency, and the like, and thus has application in a wide range of uses, such as exterior materials of electrical and electronic products, automobile parts, building materials, optical articles, clothing materials, and medical articles. Particularly, due to the transparent properties of polycarbonate, the range of use of polycarbonate in the field of optical components tends to be continuously expanding.

On the other hand, a planar light source device built in the liquid crystal display device is provided with a light guide plate. Conventionally, polymethylmethacrylate has been used as a material for a light guide plate.

However, in accordance with the recent vehicle electrification, the use of polymethylmethacrylate, which is the existing material, has been limited in that the light guide plate for liquid crystal display provided in automobiles requires high heat resistance and mechanical strength.

In this regard, the conversion to polycarbonate having superior heat resistance and mechanical strength as compared with polymethylmethacrylate has been was implemented, but polycarbonate has a problem that it does not exhibit a light transmittance comparable to polymethylmethacrylate. EP 0 296 473 A2, tables I and II, claims 1-6 discloses compositions comprising a polycarbonate resin and 0,5 or 1,0 wt.-% of a dihydropyran end-capped polyalkylene glycol stabilizer.

Therefore, various methods for improving the optical properties of polycarbonate have been proposed, but a method capable of sufficiently satisfying the requirement as a light guide plate material has not yet been proposed.

### SUMMARY

It is one object of the present disclosure to provide a polycarbonate composition that enables provision of a molded article which has high light transmittance, is transparent and exhibits excellent long-term color stability.

DETAILED DESCRIPTION While the present disclosure can be modified in various ways and take on various alternative forms, specific embodiments thereof are illustrated and described in detail below.

Prior to the description, the technical terms used herein is only for mentioning specific embodiments of the present disclosure and is not intended to limit the scope of the present disclosure, unless the context clearly indicates otherwise. Singular expressions used herein may include the plural expressions unless they are differently expressed contextually.

Now, a polycarbonate composition and a molded article thereof according to specific embodiments of the present disclosure will be described in detail.

### Polycarbonate Composition

According to one embodiment of the present disclosure, there is provided a polycarbonate composition comprising: 100 parts by weight of polycarbonate; 0.05 to 2.5 parts by weight of a polyalkylene glycol end-capped with a pyran-based compound; 0.05 to 0.70 parts by weight of a phosphite-based antioxidant; and 0.005 to 0.15 parts by weight of a hindered phenolic antioxidant.

In order to improve the light transmittance of the existing polycarbonate, a method of adding polyalkylene glycol has been attempted, but polyalkylene glycol is insufficient in heat resistance, which causes a problem that when the polycarbonate composition is molded at a high temperature, the light transmittance of the molded article is lowered.

Thus, the present inventors confirmed that the end of the polyalkylene glycol is capped with a specific compound, which is then blended with two specific antioxidants in polycarbonate in a predetermined content, thereby capable of providing a molded article which has high light transmittance and is transparent, and particularly, of providing a molded article having excellent long-term color stability, and completed the present disclosure.

Hereinafter, the polycarbonate composition according to one embodiment of the present disclosure will be described in detail.

### Polycarbonate

The type of polycarbonate included in the polycarbonate composition according to one embodiment of the present disclosure is not particularly limited. The polycarbonate composition may include various polycarbonates known in the technical field to which claimed invention pertains.

As a non-limiting example, the polycarbonate is an aromatic polycarbonate, which can be prepared by polymerization of an aromatic diol compound and a carbonate precursor.

Non-limiting examples of the aromatic diol compound include at least one selected from the group consisting of bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, bisphenol A, 2,2-bis(4-hydroxyphenyl)butane, 1,1-bis(4-hydroxyphenyl)cyclohexane, 1,1-bis(4-hydroxyphenyl)-1-phenylethane and bis(4-hydroxyphenyl)diphenylmethane.

Further, non-limiting examples of the carbonate precursor include at least one selected from the group consisting of dimethyl carbonate, diethyl carbonate, dibutyl carbonate, dicyclohexyl carbonate, diphenyl carbonate, ditolyl carbonate, bis(chlorophenyl)carbonate, di-m-cresyl carbonate, dinaphthyl carbonate, bis(diphenyl)carbonate, phosgene, triphosgene, diphosgene, bromophosgene and bishaloformate.

The polymerization of the aromatic diol compound and the carbonate precursor can be performed by interfacial polymerization. The interfacial polymerization has the advantage that polymerization reaction can be performed at normal pressure and low temperature, and the molecular weight can be easily adjusted. Further, as an example, the interfacial polymerization may include adding a coupling agent after prepolymerization, and then performing polymerization again, and in this case, a high molecular weight polycarbonate can be obtained.

The polymerization temperature is preferably 0°C to 40°C, and the reaction time is preferably 10 minutes to 24 hours. Moreover, the pH during the reaction is preferably maintained at 9 or more, or 11 or more.

The solvent that can be used for the polymerization is not particularly limited as long as it is a solvent used for the polymerization of polycarbonate in the art. As an example, halogenated hydrocarbons such as dichloromethane and chlorobenzene can be used.

Further, the polymerization is preferably performed in the presence of an acid binder. As the acid binder, an alkali metal hydroxide such as sodium hydroxide or potassium hydroxide, or an amine compound such as triethylamine or pyridine. can be used.

Further, in order to adjust the molecular weight of the polycarbonate during the polymerization, it is preferable to perform polymerization in the presence of a molecular weight modifier. C₁₋₂₀ alkylphenol can be used as the molecular weight modifier. Specific examples thereof include p-tert-butylphenol, p-cumylphenol, decylphenol, dodecylphenol, tetradecylphenol, hexadecylphenol, octadecylphenol, eicosylphenol, docosylphenol or triacontylphenol. The molecular weight modifier can be added before the initiation of polymerization, during the initiation of polymerization, or after the initiation of polymerization. The molecular weight modifier is contained, for example, in an amount of 0.01 parts by weight or more, 0.1 parts by weight or more, or 1 part by weight or more, and 10 parts by weight or less, 6 parts by weight or less, or 5 parts by weight or less, when the total weight of the aromatic diol compound is 100 parts by weight. Within this range, a desired molecular weight can be obtained.

Additionally, in order to promote the polymerization reaction, a reaction accelerator such as a tertiary amine compound, a quaternary ammonium compound and a quaternary phosphonium compound, such as triethylamine, tetra-n-butylammonium bromide, or tetra-n-butylphosphonium bromide can be further used.

The polycarbonate may have a weight average molecular weight of 14,000 g/mol or more, 15,000 g/mol or more, 16,000 g/mol or more, 17,000 g/mol or more, or 18,000 g/mol or more, and 50,000 g/mol or less, 45,000 g/mol or less, 40,000 g/mol or less, 35,000 g/mol or less, 30,000 g/mol or less or 25,000 g/mol or less. Within this range, good processability and various physical properties can be exhibited.

### Polyalkylene glycol end-capped with pyran-based compound

There have been attempts to improve the light transmittance by adding polyalkylene glycol to the existing polycarbonate composition. However, the heat resistance of polyalkylene glycol was poor, and thus the effect of improving the light transmittance of the molded article obtained after high-temperature molding was an insignificant level.

However, according to the one embodiment, the terminal hydroxy group of the polyalkylene glycol is capped with a pyran-based compound, and thus can improve the light transmittance of the molded article obtained after high-temperature molding. Further, excellent color stability can be realized even when applied to parts exposed to high temperatures for a long period of time, such as the light guide plate of a display built into a vehicle.

The pyran-based compound may react with the terminal hydroxyl group of the polyalkylene glycol to form a stable acetal group, and can reinforce the heat resistance of the polyalkylene glycol.

The pyran-based compound may be a substituted or unsubstituted pyran, or a substituted or unsubstituted dihydropyran.

Further, the polyalkylene glycol can be obtained by reacting one, two or more, or three or more kinds of alkylene glycols, and each alkylene group included in the polyalkylene glycol may be an alkylene group having 2 to 12 carbon atoms.

A compound in which the terminal hydroxyl group of the polyalkylene glycol is capped with a pyran-based compound may be represented by the following Chemical Formula 1. 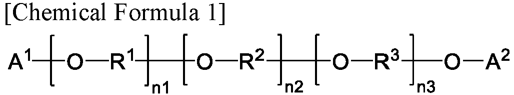
wherein, in Chemical Formula 1,
R¹ to R³ are each independently an alkylene group having 2 to 12 carbon atoms,
A¹ and A² are each independently a substituted or unsubstituted dihydropyranyl group, or a substituted or unsubstituted tetrahydropyranyl group, and
n1, n2 and n3 are 0 or a positive integer, where the sum of n1, n2 and n3 is 4 to 50.

When unsubstituted or substituted pyran is used as the pyran-based compound, A¹ and A² are each independently a substituted or unsubstituted dihydropyranyl group, and when substituted or unsubstituted dihydropyran is used as the pyran-based compound, A¹ and A² are each independently a substituted or unsubstituted tetrahydropyranyl group. Further, each repeating unit of Chemical Formula 1 may be included in a block form or may be included irregularly.

Specifically, R¹, R² and R³ may be each independently an alkylene group having 2 to 8 carbon atoms, an alkylene group having 2 to 6 carbon atoms, or an alkylene group having 2 to 4 carbon atoms. More specifically, R¹, R² and R³ may be each independently ethylene, propylene, or butylene.

Further, the A¹ and A² are each independently any one of substituents represented by the following structural formulas: 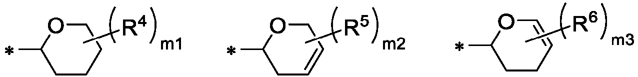 wherein,
m1 is an integer from 0 to 9, m2 and m3 are each independently an integer of 0 to 7, provided that when m1, m2 or m3 is 2 or more, a plurality of R⁴, R⁵ or R⁶ is the same as or different from each other, R⁴, R⁵ and R⁶ are each independently a halogen, an alkyl group having 1 to 6 carbon atoms, or an alkoxy group having 1 to 6 carbon atoms or -OCOR⁷, and R⁷ is an alkyl group having 1 to 6 carbon atoms.

Specifically, in the structural formulas of A₁ and A₂, m1, m2, and m3 are each independently 0 or an integer of 1 to 3, R⁴, R⁵ and R⁶ may be each independently a substituent which is fluorine, chlorine, methyl, ethyl, propyl, methoxy, ethoxy or - OCOCH₃. More specifically, the A₁ and A₂ may be an unsubstituted tetrahydropyranyl group.

The sum of n1, n2, and n3 may be 4 or more, 6 or more, 8 or more, or 10 or more, and may be 50 or less, 40 or less, 35 or less, or 30 or less. Within this range, a polyalkylene glycol end-capped with a pyran-based compound having an appropriate molecular weight can be included, thereby realizing desired physical properties while exhibiting excellent compatibility with polycarbonate.

The polyalkylene glycol end-capped with the pyran-based compound is contained in an amount of 0.05 parts by weight or more, 0.07 parts by weight or more, or 0.09 parts by weight or more, and 2.5 parts by weight or less, 2.0 parts by weight or less, or 1.5 parts by weight or less, based on 100 parts by weight of polycarbonate, and thus can exhibit excellent color stability and light transmittance.

### Antioxidant

The polycarbonate composition according to the one embodiment simultaneously includes a phosphite-based antioxidant and a hindered phenol-based antioxidant together with the polyalkylene glycol end-capped with the pyran-based compound, and thus can provide a molded article which has high light transmittance and is transparent.

In particular, the phosphite-based antioxidant may include a spirophosphite-based antioxidant represented by the following Chemical Formula 2. 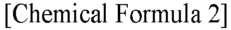 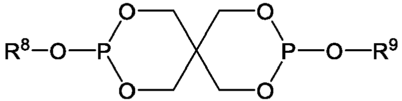 wherein, in Chemical Formula 2,
R⁸ and R⁹ are each independently a substituted or unsubstituted alkyl group having 1 to 30 carbon atoms, or a substituted or unsubstituted aryl group having 6 to 30 carbon atoms.

Specifically, the phosphite-based antioxidant may include a spirophosphite-based antioxidant in which the R⁸ and R⁹ of Chemical Formula 2 are each independently an alkyl group having 8 to 30 carbon atoms, or a spirophosphite-based antioxidant represented by the following Chemical Formula 2-1: 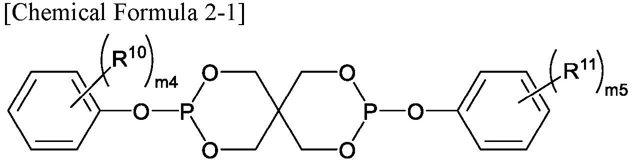 wherein, in Chemical Formula 2-1,
m4 and m5 are each independently an integer of 0 to 5, provided that when m4 or m5 is 2 or more, a plurality of R¹⁰ or R¹¹ are the same as or different from each other, and
R¹⁰ and R¹¹ are each independently an alkyl group having 1 to 12 carbon atoms which is unsubstituted or substituted with an aryl having 6 to 30 carbon atoms.

Specific examples of the spirophosphite-based antioxidant in which the R⁸ and R⁹ of Chemical Formula 2 are each independently an alkyl group having 8 to 30 carbon atoms may include dioctadecylpentaerythritol diphosphate, or the like, and specific examples of the spirophosphite-based antioxidant of Chemical Formula 2-1 may include bis(2,4-dicumylphenyl)pentaerythritol diphosphate, bis(2,4-di-t-butylphenyl)pentaerythritol diphosphate, or the like.

The phosphite-based antioxidant is contained in an amount of 0.05 parts by weight or more, 0.07 parts by weight or more, or 0.10 parts by weight or more, and 0.70 parts by weight or less, 0.50 parts by weight or less, or 0.30 parts by weight or less, based on 100 parts by weight of polycarbonate, and thus can exhibit excellent color stability and light transmittance.

On the other hand, the hindered phenol-based antioxidant may include at least one functional group represented by the following structural formula. 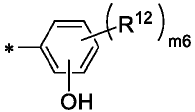 wherein,
m6 is an integer from 1 to 4, provided that when m6 is 2 or more, a plurality of R¹² are the same as or different from each other, and each R¹² is independently a branched alkyl group having 3 to 30 carbon atoms.

Specifically, the hindered phenolic antioxidant may include 1 or more, 2 or more, 3 or more, or 4 or more functional groups in which m6 of the structural formula is an integer of 2 to 4 or 2, and a plurality of R¹² is t-butyl.

More specifically, the hindered phenolic antioxidant may be at least one selected from the group consisting of pentaerythritol tetrakis[3-(3,5-di-t-butyl-4-hydroxyphenyl)propionate], 1,3,5-trimethyl-2,4,6-tris(3,5-di-t-butyl-4-hydroxybenzyl)benzene, and tris(3,5-di-t-butyl-4-hydroxybenzyl)isocyanurate.

The hindered phenolic antioxidant is contained in an amount of 0.005 parts by weight or more, 0.010 parts by weight or more, 0.020 parts by weight or more, or 0.030 parts by weight or more, and 0.15 parts by weight or less, 0.10 parts by weight or less, or 0.08 parts by weight or less, based on 100 parts by weight of polycarbonate, and thus can exhibit excellent color stability and light transmittance.

### Polycarbonate Composition

The polycarbonate composition according the one embodiment has a feature that when prepared as a specimen with a width, length and thickness of 60 mm, 40 mm and 3 mm, the yellowness index measured for light of 570 nm to 580 nm in accordance with ASTM E313 may have a low value of 0.30 to 0.70, 0.40 to 0.68 or 0.50 to 0.65.

The polycarbonate composition according the one embodiment has a feature that when prepared as a specimen with a width of 150 mm, a length of 80 mm and a thickness of 4 mm, a transmittance of long-wavelength light measured by irradiating light of 380 to 780 nm in a direction perpendicular to the thickness of the specimen may have a high value of 80% to 90%, 82 % to 88 %, or 83 % to 86 %.

The polycarbonate composition according the one embodiment has a feature that when prepared as a specimen with a width of 150 mm, a length of 80 mm and a thickness of 4 mm, a color of long-wavelength light measured by irradiating light of 380 to 780 nm in a direction perpendicular to the thickness of the specimen may have a low value of 3.00 to 6.50, 4.00 or 6.00, or 5.00 to 5.80.

The polycarbonate composition according the one embodiment has a feature that when prepared as a specimen a width of 60 mm, a length of 40 mm and a thickness of 3 mm, a long-term color stability, which is defined by the difference between an initial yellowness index measured for light between 570 nm and 580 nm in accordance with ASTM E313 and a subsequent yellowness index measured after leaving the specimen at 85°C and 85% RH for 7 days under IEC 60068-2-78 conditions, may have a low value of 0 to 0.20, 0.01 to 0.15, 0.02 to 0.10, or 0.03 to 0.09.

### Resin Molded Article

According to another embodiment of the present disclosure, there is provided a molded article including the above-mentioned polycarbonate composition.

The molded article is an article obtained by molding the polycarbonate composition as a raw material by a method such as extrusion, injection, or casting. The molding method and its conditions can be appropriately selected and adjusted in accordance with the type of the molded article.

As a non-limiting example, the molded article can be obtained by a method of mixing and extrusion molding the polycarbonate composition to prepare pellets, and then drying and injecting the pellets.

The above-mentioned polycarbonate composition has high light transmittance, is transparent, and particularly has excellent long-term color stability. The molded article produced therefrom can be used in various product groups, and is particularly easily applied to optical articles and medical articles sterilized by gamma-rays. Specifically, it can be easily applied to a light guide plate for an LCD display, a light guide for an automotive lamp, various buttons, and a keyboard keycap transmitted through an LED backlight, but is not particularly limited thereto.

The polycarbonate composition according to one embodiment of the present disclosure is a composition in which polyalkylene glycol end-capped with a specific compound is blended in polycarbonate together with two specific antioxidants in a predetermined amount, and can provide a molded article which has high light transmittance, is transparent, and particularly has excellent long-term color stability.

### EXAMPLES

Hereinafter, the action and effect of the invention will be described more specifically with reference to specific examples. However, these examples are presented for illustrative purposes only, and are not intended to limit the scope of the present disclosure in any way.

### Preparation Example 1: Preparation of DHP-end-capped polyalkylene glycol (B-1)

1.0 kg of polypropylene glycol (Mn = 1,000 g/mol) and 5.0 g (0.02 eq) of pyridinium p-toluenesulfonate were dissolved in 6.0 L of dichloromethane (DCM) solvent, heated and stirred, and then 336.5 g (4.0 eq) of 3,4-dihydropyran (DHP) was slowly added dropwise thereto. Then, the reaction mixture was heated and stirred for 2 hours, and then cooled to room temperature, to which 6.0 L of 5.0 wt.% potassium carbonate (K₂CO₃) aqueous solution was added and neutralized. Anhydrous magnesium sulfate (MgSO₄) was added to the organic layer, and the mixture was dried. The remaining 3,4-dihydropyran and DCM were removed under vacuum distillation. Thereby, 1.7 kg of DHP-end-capped polyalkylene glycol (B-1) was prepared.

### Preparation Example 2: Preparation of DHP-end-capped polyalkylene glycol (B-2)

A DHP-end-capped polyalkylene glycol (B-2) was prepared in the same manner as in Preparation Example 1, except that 2.0 kg of polypropylene glycol (Mn = 2,000 g/mol) was used in Preparation Example 1.

### Preparation Example 3: Preparation of BGE-end-capped polyalkylene glycol (B-3)

1 kg of polypropylene glycol (PPG) having a number average molecular weight of 1,000 g/mol and 1 g (0.1 wt.%) of KOH were added to a 2 L three-neck flake, and then the temperature was raised to 80°C while stirring under an N₂ atmosphere. Then, 300 g of butylglycidyl ether (BGE) was added and reacted for 2 hours. The reaction temperature was lowered to 25°C, and then phosphoric acid was added and neutralized, and the residue was distilled off under reduced pressure. Thereby, BGE-end-capped polyalkylene glycol (B-3) was prepared.

### Preparation Example 4: Preparation of polyalkylene glycol (B-4) starting from DHP-end-capped CHDM

300 g of polypropylene glycol (Mw = 2000 g/mol, hydroxy number = about 45 to 60) based on cyclohexanedimethanol (CHDM) represented by the following Chemical Formula (a) was introduced in about 300 mL of cyclohexane together with 26.4 g of dihydropyran and 0.25 g of p-toluene sulfonic acid (catalyst). The reaction temperature was raised to 65°C, and the mixture was maintained at this temperature for 10 hours, and then cooled. A stoichiometric amount of trimethylamine was added to neutralize the acid catalyst, and the obtained reaction product was filtered and then distilled under reduced pressure to remove the residual solvent. Thereby, polyalkylene glycol (B-4) based on DHP-end-capped CHDM was prepared.

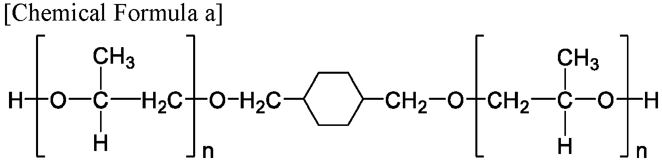

### Example 1: Preparation of polycarbonate composition

100 parts by weight of LUPOY PC1080 (weight average molecular weight: 19,500 g/mol, A-1 available from LG Chem) as polycarbonate, 0.3 parts by weight of DHP-end-capped polyalkylene glycol (B-1) prepared in Preparation Example 1, 0.05 parts by weight of pentaerythritol tetrakis[3-(3,5-di-tert-butyl-4-hydroxyphenyl)propionate] (Songnox 1010, C available from Songwon Industrial) as a hindered phenolic antioxidant and 0.15 parts by weight of bis(2,4-dicumylphenyl)pentaerythritol diphosphite (Doverphos 9228, D available from Dover Chemical) as a phosphite-based antioxidant were mixed and then put into a twin-screw extruder (L/D = 36, Φ = 45, barrel temperature 240°C) to prepare a pelletized polycarbonate composition.

### Examples 2 to 6 and Comparative Examples 1 to 12: Preparation of polycarbonate composition

A pelletized polycarbonate composition sample was prepared in the same manner as in Example 1, except that in Example 1, the type and/or content of the polyalkylene glycol-end-capped and the antioxidant were changed to those of the modified or unmodified polyalkylene glycol and the antioxidant listed in Table 1.

**[Table 1]**

| Category | PC | | Polyalkylene glycol-based additive | | | | | | | Antioxidant | | |
|---|---|---|---|---|---|---|---|---|---|---|---|---|
| | A-1 | A-2 | B-1 | B-2 | B-3 | B-4 | B-5 | B-6 | B-7 | C | D | E |
| Example 1 | 100 | - | 0.3 | | - | - | - | - | - | 0.05 | 0.15 | - |
| Example 2 | 100 | - | - | 0.1 | - | - | - | - | - | 0.05 | 0.15 | - |
| Example 3 | 100 | - | - | 0.3 | - | - | - | - | - | 0.05 | 0.15 | - |
| Example 4 | 100 | - | - | 0.5 | - | - | - | - | - | 0.05 | 0.15 | - |
| Example 5 | 100 | - | - | 1.0 | - | - | - | - | - | 0.05 | 0.15 | - |
| Example 6 | | 100 | | 0.3 | - | - | - | - | - | 0.05 | 0.15 | - |
| Comparative Example 1 | 100 | - | - | - | - | - | 0.3 | - | - | 0.05 | 0.15 | - |
| Comparative Example 2 | 100 | - | - | - | - | - | - | 0.3 | - | 0.05 | 0.15 | - |
| Comparative Example 3 | 100 | - | - | - | - | - | - | - | - | - | - | - |
| Comparative Example 4 | 100 | - | - | 0.01 | - | - | - | - | - | 0.05 | 0.15 | - |
| Comparative Example 5 | 100 | - | - | 3.0 | - | - | - | - | - | 0.05 | 0.15 | - |
| Comparative Example 6 | 100 | - | - | 0.3 | - | - | - | - | - | 0.001 | 0.15 | - |
| Comparative Example 7 | 100 | - | - | 0.3 | - | - | - | - | - | 0.20 | 0.15 | - |
| Comparative Example 8 | 100 | - | - | 0.3 | - | - | - | - | - | 0.05 | 0.01 | - |
| Comparative Example 9 | 100 | - | - | 0.3 | - | - | - | - | - | 0.05 | 0.80 | - |
| Comparative Example 10 | 100 | - | - | - | 0.3 | - | - | - | - | 0.05 | 0.15 | - |
| Comparative Example 11 | 100 | - | - | - | - | 0.3 | - | - | - | 0.05 | 0.15 | - |
| Comparative Example 12 | 100 | - | - | 0.3 | - | - | - | - | - | - | - | 0.3 |

| | | | | | | | | | | | | |
|---|---|---|---|---|---|---|---|---|---|---|---|---|
| (Unit: parts by weight, based on 100 parts by weight of polycarbonate) A-1: LUPOY PC1080 (Mw = 19,500 g/mol) available from LG Chem A-2: LUPOY PC1300-30 (Mw = 21,500 g/mol) available from LG Chem B-1: DHP-end-capped polyalkylene glycol prepared in Preparation Example 1 B-2: DHP-end-capped polyalkylene glycol prepared in Preparation Example 2 B-3: BGE-end-capped polyalkylene glycol prepared in Preparation Example 3 B-4: polyalkylene glycol starting from DHP-end-capped CHDM prepared in Preparation Example 4 B-5: polypropylene glycol (Mn = 2,000 g/mol, Uniol-D available from NOF Corp.) B-6: polypropylene glycol-co-polytetramethylene glycol (Mn = 2,000 g/mol, Polycerin DCB 2000 available from NOF Corp.) C: Songnox 1010 available from Songwon Industrial D: Doverphos 9228 available from Dover Chemical E: 1,8-naphthosultone | | | | | | | | | | | | |

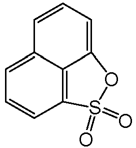

### Test Example: Evaluation of physical properties of polycarbonate composition

The physical properties of this example were measured by the method described below, and the results are shown in Table 2 below.
1) Weight average molecular weight (Mw): Measured by GPC (Agilent 1200 series) using a PC standard.
2) Number average molecular weight (Mn): Measured by GPC (Agilent 1200 series) using a PS standard.
3) Yellowness index (YI): The respective pellets prepared in Examples and Comparative Examples was injection-molded without residence time at a cylinder temperature of 250°C using an injection molding machine N-20C (manufactured by JSW, Ltd.) to prepare a specimen (width x length x thickness = 60 mm x 40 mm x 3 mm), and the yellowness index was measured for light of 570 nm to 580 nm in accordance with ASTM E313.
4) Transmittance of Long-Wavelength Light and Color of Long-Wavelength Light: The respective pellets prepared in Examples and Comparative Examples were injection-molded without residence time at a cylinder temperature of 270°C using an injection molding machine N-20C (manufactured by JSW, Ltd.) to prepare a specimen (width x length x thickness = 150 mm x 80 mm x 4 mm), and the transmittance of long-wavelength light (total transmitted light; Tt) and the color of long-wavelength light were measured by irradiating light of 380 to 780 nm in a direction perpendicular to the thickness using a spectrophotomerter U-4100 available from Hitachi, Ltd. The color of long-wavelength light were measured in accordance with JIS Z8722.
5) Long-term color stability: The specimens for which the yellowness index was measured were left at 85°C and 85% RH for 7 days under IEC 60068-2-78 conditions, and then the yellowness index was measured in the same manner according to the method for measuring the yellowness index (ASTM E313). The value obtained by subtracting the value of the initial yellowness index from the value of the yellowness index measured after leaving it for 7 days was evaluated as a long-term color stability.

**[Table 2]**

| Category | Yellowness index | Color of long-wavelength light | Transmittance of long-wavelength light (%) | Long-term color stability |
|---|---|---|---|---|
| Example 1 | 0.60 | 5.45 | 84.75 | 0.08 |
| Example 2 | 0.65 | 5.72 | 84.15 | 0.09 |
| Example 3 | 0.62 | 5.61 | 84.33 | 0.04 |
| Example 4 | 0.61 | 5.50 | 84.63 | 0.04 |
| Example 5 | 0.61 | 5.52 | 84.65 | 0.05 |
| Example 6 | 0.63 | 5.76 | 84.23 | 0.06 |
| Comparative Example 1 | 0.62 | 6.12 | 83.17 | 0.05 |
| Comparative Example 2 | 0.63 | 5.63 | 84.21 | 0.17 |
| Comparative Example 3 | 0.85 | 10.52 | 78.12 | 0.05 |
| Comparative Example 4 | 0.68 | 8.31 | 81.12 | 0.10 |
| Comparative Example 5 | 0.78 | 8.75 | 67.36 | 0.07 |
| Comparative Example 6 | 0.63 | 6.32 | 82.15 | 0.55 |
| Comparative Example 7 | 0.81 | 8.51 | 81.05 | 0.07 |
| Comparative Example 8 | 0.85 | 9.12 | 78.10 | 0.08 |
| Comparative Example 9 | 0.72 | 7.35 | 80.12 | 0.83 |
| Comparative Example 10 | 0.79 | 8.12 | 79.53 | 0.12 |
| Comparative Example 11 | 0.77 | 7.86 | 78.33 | 0.09 |
| Comparative Example 12 | 0.89 | 10.13 | 77.85 | 1.08 |

Referring to Table 2, it can be confirmed that in the case where polycarbonate is not added, the optical properties are most deteriorated (Comparative Example 3), and it is confirmed that in the case where the modified or unmodified polyalkylene glycol is not added, it exhibits a color of long-wavelength light of 8 or more, a transmittance of long-wavelength light of 82% or less and a long-term color stability of 0.10 or more (Comparative Example 4).

Further, even when an unmodified polyalkylene glycol end-capped with DHP is used, it shows a color of long-wavelength light of 6 or more and a transmittance of long-wavelength light of less than 83.20% (Comparative Example 1), or shows a long-term color stability of 0.10 or more (Comparative Example 2).

However, it is confirmed that even if polyalkylene glycol capped with DHP is used, the excessive use is rather more deteriorated in optical properties than when the modified or unmodified polyalkylene glycol is not added (Comparative Example 5), and that when the content of the hindered phenolic antioxidant is outside the content range according to an embodiment of the invention (Comparative Examples 6 and 7) or when the content of the phosphite-based antioxidant is outside the content range according to an embodiment of the invention (Comparative Examples 8 and 9), the optical properties are deteriorated.

On the other hand, when BGE-end-capped polyalkylene glycols or polyalkylene glycols based on DHP-end-capped CHDM are used (Comparative Examples 10 and 11), it is confirmed that the optical properties are slightly improved compared to Comparative Example 3, but exhibit a yellowness index of 0.77 or more, a color of long-wavelength light of 7.86 or more and a transmittance of long-wavelength light of 79.53% or less and a long-term color stability of 0.09 or more.

On the other hand, when 1,8-naphthosultone was used instead of a phosphite-based antioxidant and a hindered phenol-based antioxidant (Comparative Example 12), it can be confirmed that the yellowness index and the color of long-wavelength light have large values, the transmittance of long-wavelength light is less than 77%, and the long-term color stability is 1 or more, and thus the optical properties significantly deteriorated compared to the Examples.

Accordingly, it is confirmed that a polycarbonate molded article having excellent optical properties can be provided only when it contains a specific composition of polycarbonate, end-capped polyalkylene glycol, hindered phenolic antioxidant, and phosphite-based antioxidant according to an embodiment of the present disclosure.

## Claims

1. A polycarbonate composition comprising:
100 parts by weight of polycarbonate;
0.05 to 2.5 parts by weight of a polyalkylene glycol end-capped with a pyran-based compound;
0.05 to 0.70 parts by weight of a phosphite-based antioxidant; and
0.005 to 0.15 parts by weight of a hindered phenolic antioxidant.

2. The polycarbonate composition according to claim 1, wherein the polycarbonate has a weight average molecular weight of 14,000 to 50,000 g/mol, determined as indicated in the specification.

3. The polycarbonate composition according to claim 1, wherein the polyalkylene glycol end-capped with the pyran-based compound is represented by the following Chemical Formula 1: 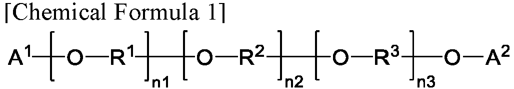 wherein, in Chemical Formula 1,
R¹, R² and R³ are each independently an alkylene group having 2 to 12 carbon atoms,
A¹ and A² are each independently a substituted or unsubstituted dihydropyranyl group, or a substituted or unsubstituted tetrahydropyranyl group, and
n1, n2 and n3 are 0 or a positive integer, where the sum of n1, n2 and n3 is 4 to 50.

4. The polycarbonate composition according to claim 3, wherein the A¹ and A² are each independently any one of substituents represented by the following structural formulas: 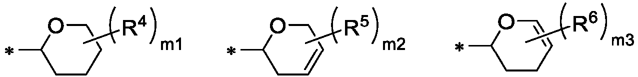 wherein,
m1 is an integer from 0 to 9, m2 and m3 are each independently an integer of 0 to 7, provided that when m1, m2 or m3 is 2 or more, a plurality of R⁴, R⁵ or R⁶ is the same as or different from each other,
R⁴, R⁵ and R⁶ are each independently a halogen, an alkyl group having 1 to 6 carbon atoms, or an alkoxy group having 1 to 6 carbon atoms or -OCOR⁷, and R⁷ is an alkyl group having 1 to 6 carbon atoms.

5. The polycarbonate composition according to claim 1, wherein the phosphite-based antioxidant comprises a spirophosphite-based antioxidant represented by the following Chemical Formula 2: 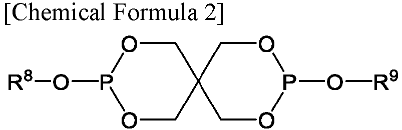 wherein, in Chemical Formula 2,
R⁸ and R⁹ are each independently a substituted or unsubstituted alkyl group having 1 to 30 carbon atoms, or a substituted or unsubstituted aryl group having 6 to 30 carbon atoms.

6. The polycarbonate composition according to claim 1, wherein the phosphite-based antioxidant comprises a spirophosphite-based antioxidant represented by the following Chemical Formula 2-1: 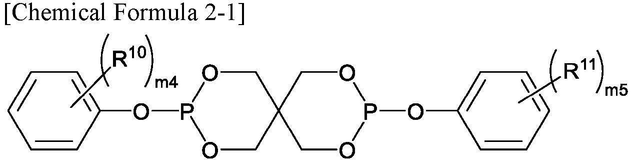 wherein, in Chemical Formula 2-1,
m4 and m5 are each independently an integer of 0 to 5, provided that when m4 or m5 is 2 or more, a plurality of R¹⁰ or R¹¹ are the same as or different from each other, and
R¹⁰ and R¹¹ are each independently an alkyl group having 1 to 12 carbon atoms which is unsubstituted or substituted with an aryl having 6 to 30 carbon atoms.

7. The polycarbonate composition according to claim 1, wherein the hindered phenolic antioxidant comprises at least one functional group represented by the following structural formula: 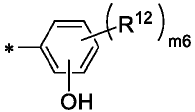 wherein,
m6 is an integer from 1 to 4, provided that when m6 is 2 or more, a plurality of R¹² are the same as or different from each other, and
each R¹² is independently a branched alkyl group having 3 to 30 carbon atoms.

8. The polycarbonate composition according to claim 1, wherein a specimen formed from the polycarbonate composition having a width of 60 mm, a length of 40 mm and a thickness of 3 mm, has a yellowness index measured for light of 570 nm to 580 nm in accordance with ASTM E313 is 0.30 to 0.70.

9. The polycarbonate composition according to claim 1, wherein a specimen formed from the polycarbonate composition having a width of 150 mm, a length of 80 mm and a thickness of 4 mm, has a transmittance of long-wavelength light measured by irradiating light of 380 to 780 nm in a direction perpendicular to the thickness of the specimen is 80% to 90%.

10. The polycarbonate composition according to claim 1, wherein a specimen formed from the polycarbonate composition having a width of 150 mm, a length of 80 mm and a thickness of 4 mm, a color of long-wavelength light measured in accordance with JIS Z8722 by irradiating light of 380 to 780 nm in a direction perpendicular to the thickness of the specimen is 3.00 to 6.50.

11. The polycarbonate composition according to claim 1, wherein when prepared as a specimen a width of 60 mm, a length of 40 mm and a thickness of 3 mm, a long-term color stability, which is defined by the difference between an initial yellowness index measured for light between 570 nm and 580 nm in accordance with ASTM E313 and a late yellowness index measured after leaving the specimen at 85°C and 85% RH for 7 days under IEC 60068-2-78 conditions, is 0 to 0.20.

12. A molded article comprising the polycarbonate composition according to claim 1.

13. The molded article according to claim 12, wherein the molded article is an optical article.

## Patentansprüche

1. Polycarbonatzusammensetzung, umfassend:
100 Gewichtsteile Polycarbonat;
0,05 bis 2,5 Gewichtsteile eines Polyalkylenglykols, das mit einer Verbindung auf Pyranbasis endverkappt ist;
0,05 bis 0,70 Gewichtsteile eines Antioxidans auf Phosphitbasis; und
0,005 bis 0,15 Gewichtsteile eines gehinderten phenolischen Antioxidans.

2. Polycarbonatzusammensetzung nach Anspruch 1, wobei das Polycarbonat ein gewichtsmittleres Molekulargewicht von 14.000 bis 50.000 g/mol aufweist, bestimmt wie in der Beschreibung angegeben.

3. Polycarbonatzusammensetzung nach Anspruch 1, wobei das Polyalkylenglykol, das mit der Verbindung auf Pyranbasis endverkappt ist, durch die folgende chemische Formel 1 dargestellt wird: 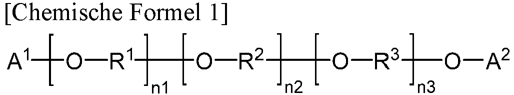 wobei in der chemischen Formel 1
R¹, R² und R³ jeweils unabhängig eine Alkylengruppe mit 2 bis 12 Kohlenstoffatomen sind,
A¹ und A² jeweils unabhängig eine substituierte oder unsubstituierte Dihydropyranylgruppe oder eine substituierte oder unsubstituierte Tetrahydropyranylgruppe sind, und
n1, n2 und n3 0 oder eine positive ganze Zahl sind, wobei die Summe von n1, n2 und n3 4 bis 50 ist.

4. Polycarbonatzusammensetzung nach Anspruch 3, wobei A¹ und A² jeweils unabhängig einer der Substituenten sind, die durch die folgenden Strukturformeln dargestellt werden: 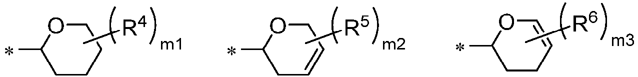 wobei
m1 eine ganze Zahl von 0 bis 9 ist, m2 und m3 jeweils unabhängig eine ganze Zahl von 0 bis 7 sind, vorausgesetzt, dass, wenn m1, m2 oder m3 2 oder mehr ist, eine Vielzahl von R⁴, R⁵ oder R⁶ gleich oder verschieden voneinander ist,
R⁴, R⁵ und R⁶ jeweils unabhängig ein Halogen, eine Alkylgruppe mit 1 bis 6 Kohlenstoffatomen oder eine Alkoxygruppe mit 1 bis 6 Kohlenstoffatomen oder -OCOR⁷ sind, und R⁷ eine Alkylgruppe mit 1 bis 6 Kohlenstoffatomen ist.

5. Polycarbonatzusammensetzung nach Anspruch 1, wobei das Antioxidans auf Phosphitbasis ein Antioxidans auf Spirophosphitbasis umfasst, das durch die folgende chemische Formel 2 dargestellt wird: 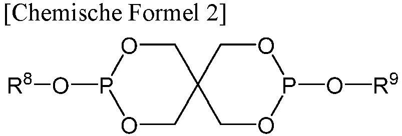 wobei in der chemischen Formel 2
R⁸ und R⁹ jeweils unabhängig eine substituierte oder unsubstituierte Alkylgruppe mit 1 bis 30 Kohlenstoffatomen oder eine substituierte oder unsubstituierte Arylgruppe mit 6 bis 30 Kohlenstoffatomen sind.

6. Polycarbonatzusammensetzung nach Anspruch 1, wobei das Antioxidans auf Phosphitbasis ein Antioxidans auf Spirophosphitbasis umfasst, das durch die folgende chemische Formel 2-1 dargestellt wird: 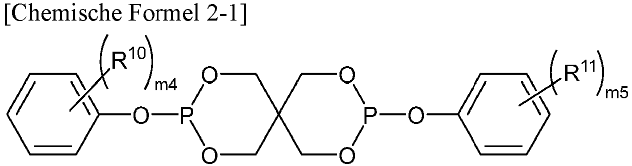 wobei in der chemischen Formel 2-1
m4 und m5 jeweils unabhängig eine ganze Zahl von 0 bis 5 sind, vorausgesetzt, dass, wenn m4 oder m5 2 oder mehr ist, eine Vielzahl von R¹⁰ oder R¹¹ gleich oder verschieden voneinander ist, und
R¹⁰ und R¹¹ jeweils unabhängig eine Alkylgruppe mit 1 bis 12 Kohlenstoffatomen sind, die unsubstituiert oder mit einem Aryl mit 6 bis 30 Kohlenstoffatomen substituiert ist.

7. Polycarbonatzusammensetzung nach Anspruch 1, wobei das gehinderte phenolische Antioxidans mindestens eine funktionelle Gruppe umfasst, die durch die folgende Strukturformel dargestellt wird: 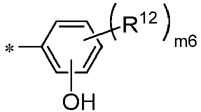 wobei
m6 eine ganze Zahl von 1 bis 4 ist, vorausgesetzt, dass, wenn m6 2 oder mehr ist, eine Vielzahl von R¹² gleich oder verschieden voneinander ist, und
jedes R¹² unabhängig eine verzweigte Alkylgruppe mit 3 bis 30 Kohlenstoffatomen ist.

8. Polycarbonatzusammensetzung nach Anspruch 1, wobei eine Probe, die aus der Polycarbonatzusammensetzung mit einer Breite von 60 mm, einer Länge von 40 mm und einer Dicke von 3 mm gebildet wird, einen Vergilbungsindex, gemessen für Licht von 570 nm bis 580 nm gemäß ASTM E313, von 0,30 bis 0,70 aufweist.

9. Polycarbonatzusammensetzung nach Anspruch 1, wobei eine Probe, die aus der Polycarbonatzusammensetzung mit einer Breite von 150 mm, einer Länge von 80 mm und einer Dicke von 4 mm gebildet wird, eine Durchlässigkeit von langwelligem Licht, gemessen durch Bestrahlen mit Licht von 380 bis 780 nm in einer Richtung senkrecht zur Dicke der Probe, von 80 % bis 90 % aufweist.

10. Polycarbonatzusammensetzung nach Anspruch 1, wobei eine Probe, die aus der Polycarbonatzusammensetzung mit einer Breite von 150 mm, einer Länge von 80 mm und einer Dicke von 4 mm gebildet wird, eine Farbe von langwelligem Licht, gemessen gemäß JIS Z8722 durch Bestrahlen mit Licht von 380 bis 780 nm in einer Richtung senkrecht zur Dicke der Probe, von 3,00 bis 6,50 beträgt.

11. Polycarbonatzusammensetzung nach Anspruch 1, wobei, wenn als Probe mit einer Breite von 60 mm, einer Länge von 40 mm und eine Dicke von 3 mm hergestellt, eine Langzeitfarbstabilität, die durch die Differenz zwischen einem anfänglichen Vergilbungsindex, gemessen für Licht zwischen 570 nm und 580 nm gemäß ASTM E313, und einem späten Vergilbungsindex, gemessen nach Verlassen der Probe bei 85 °C und 85 % RH für 7 Tage unter Bedingungen nach IEC 60068-2-78, definiert ist, 0 bis 0,20 beträgt.

12. Formkörper, umfassend die Polycarbonatzusammensetzung nach Anspruch 1.

13. Formkörper nach Anspruch 12, wobei der Formkörper ein optischer Artikel ist.

## Revendications

1. Composition de polycarbonate comprenant:
100 parties en poids de polycarbonate;
0,05 à 2,5 parties en poids d'un polyalkylène glycol à extrémités coiffées par un composé à base de pyranne;
0,05 à 0,70 parties en poids d'un antioxydant à base de phosphite; et
0,005 à 0,15 parties en poids d'un antioxydant phénolique encombré.

2. Composition de polycarbonate selon la revendication 1, dans laquelle le polycarbonate a un poids moléculaire moyen en poids de 14 000 à 50 000 g/mol, déterminé comme indiqué dans la spécification.

3. Composition de polycarbonate selon la revendication 1, dans laquelle le polyalkylène glycol à extrémités coiffées par un composé à base de pyranne est représenté par la formule chimique 1 suivante: 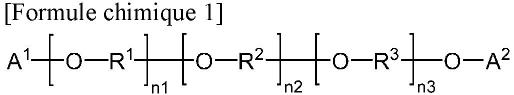 dans la formule chimique 1,
R¹, R²et R³ sont chacun indépendamment un groupe d'alkylène ayant de 2 à 12 atomes de carbone,
A¹ et A² sont chacun indépendamment un groupe dihydropyranyle substitué ou non substitué, ou un groupe tétrahydropyranyle substitué ou non substitué, et
n1, n2 et n3 sont 0 ou un nombre entier positif, la somme de n1, n2 et n3 est 4 et 50.

4. Composition de polycarbonate selon la revendication 3, dans laquelle A¹ et A² sont chacun indépendamment l'un des substituants représentés par les formules structurelles suivantes: 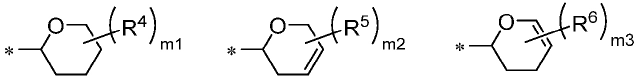
m1 est un nombre entier compris entre 0 et 9, m2 et m3 sont chacun indépendamment un nombre entier de 0 et 7, étant entendu que lorsque m1, m2 ou m3 est égal ou supérieur à 2, une pluralité de R⁴, R⁵ ou R⁶ sont identiques ou différents l'un de l'autre,
R⁴, R⁵ et R⁶ sont chacun indépendamment un halogène, un groupe alkyle ayant 1 à 6 atomes de carbone, ou un groupe alcoxy ayant 1 à 6 atomes de carbone ou - OCOR⁷, et R⁷est un groupe alkyle ayant 1 à 6 atomes de carbone.

5. Composition de polycarbonate selon la revendication 1, dans laquelle l'antioxydant à base de phosphite comprend un antioxydant à base de spirophosphite représenté par la formule chimique 2 suivante: 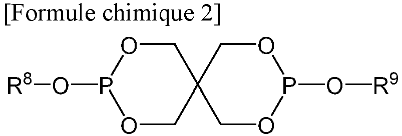 dans la formule chimique 2,
R⁸ et R⁹ sont chacun indépendamment un groupe alkyle substitué ou non substitué ayant de 1 à 30 atomes de carbone, ou un groupe aryle substitué ou non substitué ayant de 6 à 30 atomes de carbone.

6. Composition de polycarbonate selon la revendication 1, dans laquelle l'antioxydant à base de phosphite comprend un antioxydant à base de spirophosphite représenté par la formule chimique 2-1 suivante : 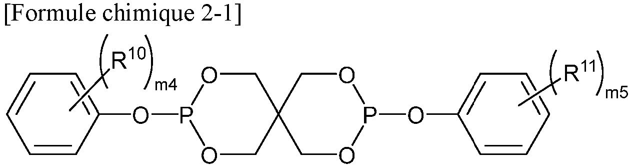 dans la formule chimique 2-1,
m4 et m5 sont chacun indépendamment un nombre entier de 0 à 5, étant entendu que lorsque m4 ou m5 est égal ou supérieur à 2, une pluralité de R¹⁰ ou R¹¹ sont identiques ou différents l'un de l'autre, et
R¹⁰ et R¹¹ sont chacun indépendamment un groupe alkyle ayant de 1 à 12 atomes de carbone, non substitué ou substitué par un aryle ayant de 6 à 30 atomes de carbone.

7. Composition de polycarbonate selon la revendication 1, dans laquelle l'antioxydant phénolique encombré comprend au moins un groupe fonctionnel représenté par la formule structurelle suivante : 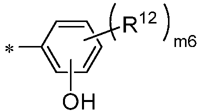
m6 est un nombre entier de 1 à 4, étant entendu que lorsque m6 est égal ou supérieur à 2, une pluralité de R¹² sont identiques ou différents les uns des autres, et
chaque R¹² est indépendamment un groupe alkyle ramifié ayant de 3 à 30 atomes de carbone.

8. Composition de polycarbonate selon la revendication 1, dans laquelle un spécimen formé à partir de la composition de polycarbonate ayant une largeur de 60 mm, une longueur de 40 mm et une épaisseur de 3 mm, a un indice de jaunissement mesuré pour une lumière de 570 nm à 580 nm conformément à l'ASTM E313 est de 0,30 à 0,70.

9. Composition de polycarbonate selon la revendication 1, dans laquelle un spécimen formé à partir de la composition de polycarbonate ayant une largeur de 150 mm, une longueur de 80 mm et une épaisseur de 4 mm, a une transmittance de la lumière de grande longueur d'onde mesurée en irradiant une lumière de 380 à 780 nm dans une direction perpendiculaire à l'épaisseur du spécimen de 80 % à 90 %.

10. Composition de polycarbonate selon la revendication 1, dans laquelle un spécimen formé à partir de la composition de polycarbonate ayant une largeur de 150 mm, une longueur de 80 mm et une épaisseur de 4 mm, une couleur de lumière de grande longueur d'onde mesurée conformément à JIS Z8722 en irradiant une lumière de 380 à 780 nm dans une direction perpendiculaire à l'épaisseur du spécimen est 3,00 à 6,50.

11. Composition de polycarbonate selon la revendication 1, dans laquelle, lorsqu'elle est préparée en tant que spécimen d'une largeur de 60 mm, d'une longueur de 40 mm et d'une épaisseur de 3 mm, la stabilité de la couleur à long terme, qui est définie par la différence entre un indice de jaunissement initial mesuré pour une lumière entre 570 nm et 580 nm conformément à la norme ASTM E313 et un indice de jaunissement tardif mesuré après avoir laissé l'échantillon à 85°C et 85% HR pendant 7 jours dans les conditions IEC 60068-2-78, est 0 à 0,20.

12. Article moulé comprenant la composition de polycarbonate selon la revendication 1.

13. Article moulé selon la revendication 12, dans lequel l'article moulé est un article optique.
